# EUROPEAN PATENT APPLICATION

(11) **EP 3 623 920 A1**
(43) Date of publication of application: **18.03.2020**
(21) Application number: 18194283.0
(22) Date of filing: 13.09.2018
(51) Int. Cl.: G06F 3/042

(54) **INTERACTIVE DISPLAY SCREEN**

(71) Applicant: Vestel Elektronik Sanayi ve Ticaret A.S., 45030 Manisa (TR)
(72) Inventor: ÖZMEN, Ferhat, 45030 Manisa (TR); AKDEMIR, Onur, 45030 Manisa (TR); YOLDAS, Burak, 45030 Manisa (TR)
(74) Representative: Flint, Adam

(57) **Abstract**

An interactive display screen (10) has a display area (12) for displaying images. The screen (10) has a first group of light emitting elements (32) for emitting light in a first direction and a first group of light receiving elements (14) for receiving light emitted by the first group of light emitting elements (32). The screen (10) has a second group of light emitting elements (26) for emitting light in a second direction and a second group of light receiving elements (22) for receiving light emitted in use by the second group of light emitting elements (26). An interaction with the display screen (10) is detected by detecting an interruption of light emitted in use by at least some of the light emitting elements as detected by at least some of the light receiving elements. The first group of light emitting elements (32) is movable in the first direction to provide an active area (38) which is a subset of the display area (10).

## Description

### Technical Field

The present disclosure relates to an interactive display screen.

### Background

A number of different technologies are available for interactive display screens, i.e. a display screens with which a user can interact directly by touching (or almost touching) the screen with a finger or pointer or stylus or the like, and not requiring a separate input device such as a mouse or keyboard, etc.

Some interactive display screens are literally touch screens, and use for example capacitive or resistive sensing to detect that the screen has been touched and the location of the touch.

Other interactive display screens use light emitters which are arranged at two edges of the (usually rectangular) screen and which emit light across the display screen towards light receivers or detectors which are provided at opposed edges of the screen. Such screens detect that the screen has been "touched" and the location of the "touch" by noting where light beams have been interrupted or blocked by the person's finger or pointer, etc. (In such screens, it is not necessary literally to touch the screen as it is the blocking of the light by the person's finger or pointer that is detected. Nevertheless, the term "touch" will often be used herein as that is the language commonly used in practice and for convenience for such screens.)

### Summary

According to a first aspect disclosed herein, there is provided an interactive display screen, the interactive display screen comprising:
a display area for displaying images;
a first group of light emitting elements for emitting light in a first direction over the display area;
a first group of light receiving elements opposed to the first group of light emitting elements for receiving light emitted in use by the first group of light emitting elements;
a second group of light emitting elements for emitting light in a second direction over the display area; and
a second group of light receiving elements opposed to the second group of light emitting elements for receiving light emitted in use by the second group of light emitting elements;
wherein the display screen is constructed and arranged to detect an interaction with the display screen by detecting an interruption of light emitted in use by at least some of the light emitting elements as detected by at least some of the light receiving elements; and
wherein at least one of the first group of light emitting elements and the first group of light receiving elements is movable in the first direction over the display area to provide an active area of the interactive display screen which is a subset of the display area.

Typically, the display area will be rectangular, and the first direction and the second direction will be perpendicular to each other and parallel to the respective edges of the display area. The first direction may be a horizontal direction across the display area.

In an example, the display screen is configured to reduce the power of or switch off light emitting elements that do not emit light over the active area.

This provides a power-saving feature in that light emitting elements that are not required to monitor an interaction in the active area may have their power consumption reduced or may be switched off altogether.

In an example, the interactive display screen is configured to receive a command which selects an active area of the interactive display screen.

Such a command may be input by a user via some interface to define the desired active area. Alternatively, the user may manually move the movable light emitting elements or light receiving elements and the command to select the active area may be obtained from an output of some sensor which monitors movement of the movable light emitting elements or light receiving elements.

In an example, the movable first group of light emitting elements or light receiving elements are mounted on a carrier which is movable across the display area in the first direction.

In an example, the carrier may be movable manually by a user. The user can therefore effectively define the active area simply by manually moving the carrier to the desired position over the display area.

In an example, the interactive display screen comprises a motor for driving movement of the carrier across the display area.

The motor may be used to move the carrier instead of allowing the user to manually move the carrier. For example, the user may define the desired active area via some interface, and the motor is then caused to operate to drive the carrier as necessary. Alternatively, the user may have the option to manually move the carrier or use the motor to drive the carrier.

In an example, the interactive display screen comprises a sensor for monitoring movement of the carrier across the display area.

The or each sensor may be for example a position sensor which detects the position of the carrier over the display area. The position sensor may be for example a contact sensor, such as for example a potentiometer or a rotary encoder, etc., or a non-contact sensor, such as for example an optical encoder, a capacitive or inductive sensor, etc. Alternatively, light emitting elements and light receiving elements of the display screen may be used as sensors to detect the position of the carrier.

In an example, both the first group of light emitting elements and the first group of light receiving elements are movable in the first direction over the display area to provide the active area.

In an example, the first group of light emitting elements is movable in the first direction over the display area, the first group of light receiving elements being fixed at a first edge of the display area;
the display screen comprising a further group of light emitting elements, said further group of light emitting elements being fixed at a second edge of the display area which is opposed to the first edge of the display area; and
the display screen comprising a further group of light receiving elements, said further group of light receiving elements being movable with the movable first group of light emitting elements and being arranged to receive light emitted in use by the further group of light emitting elements fixed at the second edge of the display area.

In an example, at least one of the second group of light emitting elements and the second group of light receiving elements is movable in the second direction over the display area to provide the active area of the interactive display screen.

In an example, both the second group of light emitting elements and the second group of light receiving elements are movable in the second direction over the display area to provide the active area.

In an example, the second group of light emitting elements is movable in the second direction over the display area, the second group of light receiving elements being fixed at a third edge of the display area;
the display screen comprising a further group of light emitting elements, said further group of light emitting elements being fixed at a fourth edge of the display area which is opposed to the third edge of the display area; and
the display screen comprising a further group of light receiving elements, said further group of light receiving elements being movable with the movable second group of light emitting elements and being arranged to receive light emitted in use by the further group of light emitting elements fixed at the fourth edge of the display area.

In an example, the interactive display screen comprises a processor constructed and arranged to control operation of the light emitting elements in accordance with the active area of the interactive display screen.

### Brief Description of the Drawings

To assist understanding of the present disclosure and to show how embodiments may be put into effect, reference is made by way of example to the accompanying drawings in which:
Figure 1 shows schematically a first example of an interactive display screen as described herein;
Figure 2 shows schematically a carrier of the screen of Figure 1;
Figure 3 shows schematically a second example of an interactive display screen as described herein;
Figure 4 shows schematically a third example of an interactive display screen as described herein;
Figure 5 shows schematically a fourth example of an interactive display screen as described herein;
Figure 6 shows schematically a fifth example of an interactive display screen as described herein; and
Figure 7 shows schematically a sixth example of an interactive display screen as described herein.

### Detailed Description

Interactive display screens according to the present disclosure use light emitting elements which emit light towards opposed light receiving elements or detectors. Such screens detect that the screen has been "touched" and the location of the "touch" by noting where light beams have been interrupted or blocked by the person's finger or stylus or pointer, etc. (It is emphasised again that in such screens, it is not necessary literally to touch the screen as it is the blocking of the light by the person's finger or pointer that is detected. Nevertheless, the term "touch" will often be used herein as that is the language commonly used in practice and for convenience for such screens.) The light emitting elements may for example emit infrared light. The light emitting elements may be for example LEDs (light emitting diodes). The light receiving elements are capable of detecting the light emitted by the light emitting elements. The light receiving elements may be for example photodiodes. The basic technology for this type of interactive display screen is well known.

In accordance with the present disclosure, at least one of a first group of light emitting elements and a first group of light receiving elements is movable in a first direction over the display area of the interactive display screen to provide an active area of the interactive display screen which is a subset of the display area. This brings at least the following advantages.

First, as an active area which is a subset of the maximum display area of the screen is provided, light emitting elements that would not emit light across the active area can have their power output reduced or can be switched off entirely. This provides a potential power saving, and can increase the working lifetime of the light emitting elements.

Secondly, the light emitting elements and the opposed light receiving elements that are operating across the active area can be brought closer together. This enables the power output of these active light emitting elements to be lower, which again saves power. In addition, the glass or other transparent surface of known display screens typically scatters the light emitted by the light emitting elements as it traverses the display screen. (The light emitting elements and the light receiving elements must be close to the screen in order for there to be some accuracy in detecting a touch, and also because consumers in general prefer slim or thin display screens.) This means first that the power output of the light emitting elements in known screens may have to be increased to account for light that is lost. In addition, ideally, there would be a one-to-one relationship between the light emitting elements and the light receiving elements. However, because the light gets scattered by known display screens, it means that light emitted by a single light emitting element may be received and detected by plural light receiving elements. This can reduce the accuracy of the detection of the location of the touch on the screen. Because in the present examples the light emitting elements and the opposed light receiving elements that are operating across the active area can be brought closer together, the effect of such scattering can be reduced, resulting in improved accuracy and/or allowing a lower light output from the light emitting elements to be used, again saving power.

Moreover, the movable group of light emitting elements and/or movable first group of light receiving elements may be provided as a unit, which can easily be replaced with a new unit in case the light emitting elements and/or light receiving elements break down over time (which happens commonly in practice). This can increase the lifetime of the overall display screen.

A number of different implementations of the present disclosure are possible, and some examples will now be described with reference to the drawings. It will be understood from the following that these are only some possible examples and that further variations may be implemented.

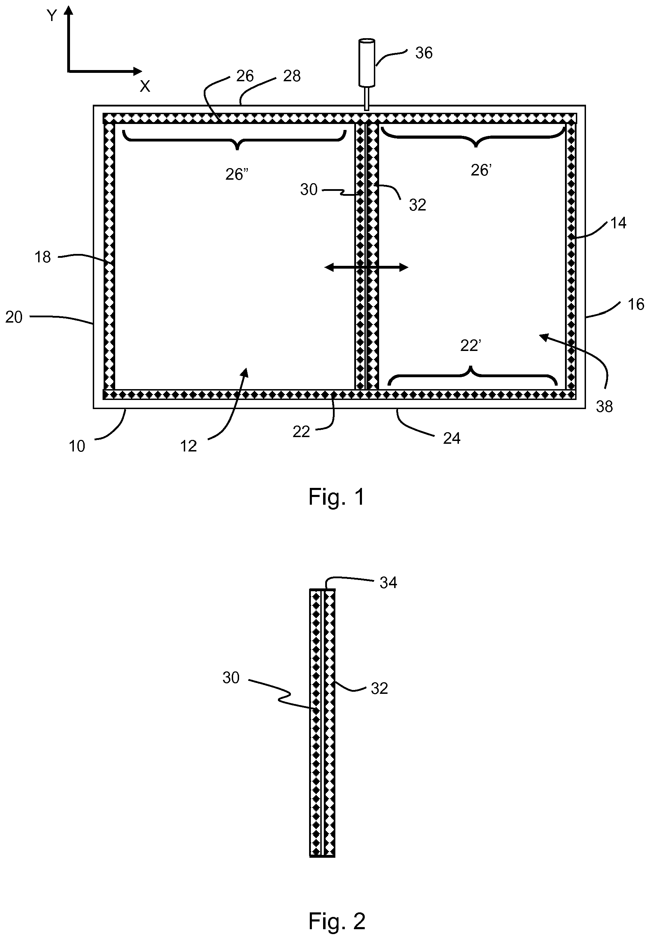

Referring first to Figure 1, this shows schematically a first example of an interactive display screen 10 according to the present disclosure. The display screen 10 has a display area 12. The display area 12 extends to, or extends practically to, each edge of the display screen 10, though there may be bezels or some other main frame of the display screen 10 at the extreme edges of the display screen 10. The display screen 10 and display area 12 in this example are rectangular as is common, though the principles described herein may be applied to display screens having other shapes. Likewise, terms such as "horizontal" and "vertical" will be used herein as is common and by convention to describe the X and Y directions respectively shown in Figure 1.

The display screen 10 may in general use any suitable display technology to display images on the display area, including for example back-projection; LCD (liquid crystal display) with an LED (light emitting diode) or other backlight; emissive elements such as LEDs, OLEDs (organic LEDs), plasma; etc. The display screen 10 has a processor, data storage at least for storing a computer program controlling operation of the display screen 10, working memory, etc. (not shown).

In the specific example of Figure 1, the display screen 10 has a group of light receiving elements 14 that are fixed at or towards a first edge 16 of the display screen 10, which in this example is the right vertical edge of the display screen 10. The display screen 10 of this specific example has a group of light emitting elements 18 that are fixed at or towards a second edge 20 of the display screen 10 which is opposed to the first edge 16 and so in this example is the left vertical edge of the display screen 10. Furthermore, the display screen 10 of this specific example has a group of light receiving elements 22 that are fixed at or towards a third edge 24 of the display screen 10, which in this example is the bottom horizontal edge of the display screen 10. In addition, the display screen 10 of this specific example has a group of light emitting elements 26 that are fixed at or towards a fourth edge 28 of the display screen 10 which is opposed to the third edge 24 and so in this example is the top horizontal edge of the display screen 10. As can be seen in the figure, light emitting elements are indicated schematically by white circles or dots and light receiving elements by black circles or dots.

In the case that the user is using the whole, maximum extent of the display area 12, then the group of light receiving elements 14, group of light emitting elements 18, group of light receiving elements 22 and group of light emitting elements 26 at the edges 16, 20, 24, 28 of the display screen 10 and the maximum display area 12 just described may be used to detect "touch" as in a conventional interactive display screen of this type.

The display screen 10 of Figure 1 further has a group of movable light receiving elements 30 and a group of movable light emitting elements 32, which are movable across the display area 12. The group of movable light receiving elements 30 are arranged vertically in this example and oppose the fixed group of light emitting elements 18 at the left vertical edge 20 of the display screen 10. Correspondingly, the group of movable light emitting elements 32 are arranged vertically in this example and oppose the fixed group of light receiving elements 14 at the right vertical edge 16 of the display screen 10. In this example, the group of movable light receiving elements 30 and the group of movable light emitting elements 32 are arranged to move together, as a unit, though in other examples these groups 30, 32 may be movable separately.

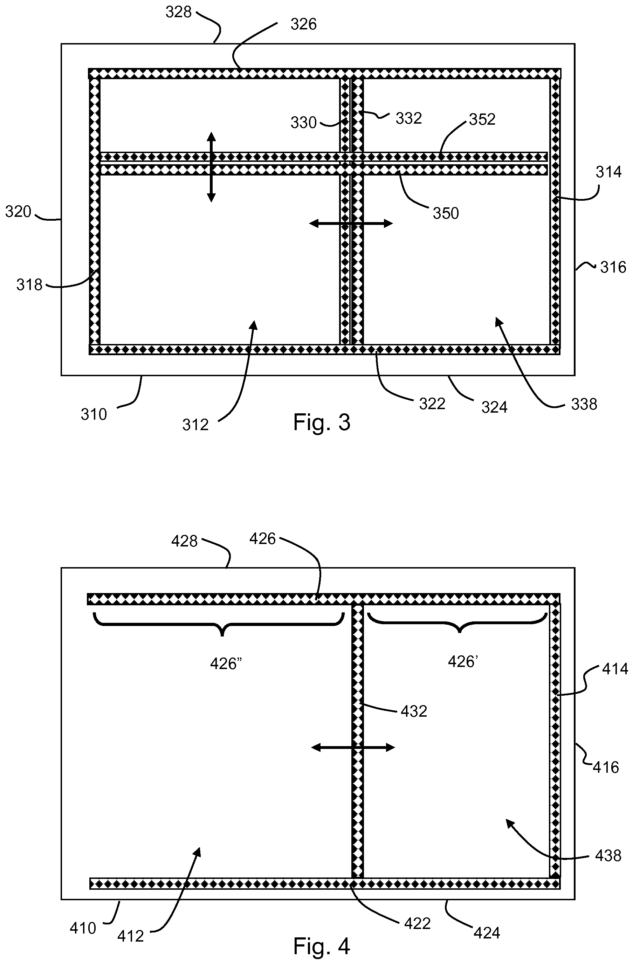

The group of movable light receiving elements 30 and the group of movable light emitting elements 32 may be mounted on a common carrier 34, as indicated schematically in Figure 3. The carrier 34 may be a rod or frame or the like, which runs in tracks or other guides provided at the top and bottom edges 28, 24 of the display screen.

The group of movable light receiving elements 30 and the group of movable light emitting elements 32 may be movable manually by a user. That is, the user can simply push the group of movable light receiving elements 30 and the group of movable light emitting elements 32 manually from side to side across the display area 12 as desired. Alternatively or additionally, the display screen 10 may include a motor 36, such as an electric motor, which can be controlled to move the movable light receiving elements 30 and the movable light emitting elements 32 as required or as selected. Both the manual movement and the motor-driven movement will be discussed further below.

In the case that the user is using the whole, maximum extent of the display area 12, then the movable light receiving elements 30 and the movable light emitting elements 32 can be pushed (manually or by the motor 36) fully to one vertical edge 16, 20 of the display screen 10.

On the other hand, if only a smaller part of the display area 12 is required for use by the user at a particular time, then the movable light receiving elements 30 and the movable light emitting elements 32 can be pushed to define the smaller "active" area that is required. In the example shown, this active area 38 is to the right of the movable light receiving elements 30 and the movable light emitting elements 32, but may equally be to the left in this example, at the choice of the user.

In any event, once the active area 38 has been selected, only the necessary light emitting elements that are required to detect and locate a touch over the active area 38 need to be powered so as to emit light. In the specific example shown in Figure 1, these are the movable light emitting elements 32 and those light emitting elements 26' at the top edge 28 of the display screen 10 that are located over the active area 38. Light from the movable light emitting elements 32 is emitted in use to pass over the active area 38 to be received by the fixed light receiving elements 14 at the right vertical edge 16 of the display screen 10. Light from the powered fixed light emitting elements 26' at the top edge 28 of the display screen 10 is emitted in use to pass over the active area 38 to be received by the corresponding fixed light receiving elements 22' that are fixed at the bottom edge 24 under the selected active area 38. Notably, all other light emitting elements can have their power output reduced or can be switched off altogether. This includes, in this illustrative example, the light emitting elements 18 that are fixed at the left vertical edge 20 of the display screen 10 and those light emitting elements 26" that are fixed at the top edge 28 of the display screen 10 but which do not overlie the active area 38.

This results in a power saving, as fewer light emitting elements are powered compared to when the whole of the display area 12 is being used. Moreover, the movable light emitting elements 32 are closer to the fixed light receiving elements 14 at the right vertical edge 16 of the display screen 10. This means that light emitted by those movable light emitting elements 32 passes over a shorter distance over the glass or other surface of the display screen 10 and is therefore subject to less scattering. In turn, this means that the power output of these movable light emitting elements 32 can be relatively lower and/or more accurate detection of a touch in the active area 38 can be obtained.

A number of options for selecting the active area 38 are possible.

As one example, the user may manually move the movable light receiving elements 30 and movable light emitting elements 32 across the display area 12 to define the active area 38. The location of the movable light receiving elements 30 and movable light emitting elements 32 may be detected by one or more sensors. The or each sensor may be for example a position sensor which detects the position of the movable light receiving elements 30 and movable light emitting elements 32 over the display area 12. The position sensor may be for example a contact sensor, such as for example a potentiometer or a rotary encoder, etc., or a non-contact sensor, such as for example an optical encoder, a capacitive or inductive sensor, etc. Alternatively, light emitting elements 26 and light receiving elements 22 at the top and bottom edges 28, 24 of the display screen 10 may be used as sensors to detect the position of the movable light receiving elements 30 and movable light emitting elements 32. In any event, once the user has manually moved the movable light receiving elements 30 and movable light emitting elements 32 to define the desired active area 38, an output of the relevant sensor that locates the movable light receiving elements 30 and movable light emitting elements 32 can be used as a command to the processor of the display screen 10 to select the active area 38. The processor can then power down or power off light emitting elements that are not required for the active area 38, as discussed above.

Alternatively or additionally, software running on the processor of the display screen 10 may provide the user with the functionality to select the active area 38, by for example touching the display screen 10. For example, on turning on the display screen 10, the software on boot-up may provide the user with the opportunity to select an active area 38. This may be presented in the form of a dialogue box or the like on the display area 12, which the user can touch to select yes or no. Alternatively or additionally, the software may provide this functionality to select the active area 38 at any time during operation of the display screen 10. Either way, in an example the user can select the active area 38 by touching the display area 12 to define the active area 38. The user may for example touch the display area 12 at first and second diagonally opposite corners of the desired active area 38 or at top left and top right (or bottom) corners of the desired active area 38, or may touch just one point of the display area 12 and the software assumes that the whole of the available display area 12 to the right (or the left) of the touched points is the desired active area 38. In any event, this touching of the display area 12 can be used as a command to the processor of the display screen 10 to select the active area 38. The processor can again then power down or power off light emitting elements that are not required for the active area 38, as discussed above. In addition, where a motor 36 for moving the movable light receiving elements 30 and the movable light emitting elements 32 is provided, the software can cause the motor 36 to drive the movable light receiving elements 30 and the movable light emitting elements 32 to the necessary position next to the selected active area 38. The location of the movable light receiving elements 30 and movable light emitting elements 32 may be detected by one or more sensors, as described above.

A number of further examples of the present disclosure will now be described with reference to Figures 3 to 7 of the drawings. Again, it will be understood that these are only some possible examples and that further variations may be implemented. Moreover, for the sake of brevity, only the main parts of the further examples will be described fully and certain details and options and alternatives will not be repeated. For example, the description of the type of display screen technology, how to select an active area of the display screen, a manual or motor-driven movement of the movable light receiving elements and the movable light emitting elements, the use of carriers for the movable light receiving elements and the movable light emitting elements, etc., will not be repeated, it being understood that various details and options and alternatives discussed above in relation to the example of Figures 1 and 2 are applicable to these examples. Moreover, in any example, the relative location of light emitting elements and light receiving elements may be reversed and located differently.

Referring next to Figure 3, this example of a display screen 310 has fixed light emitting elements 318 and fixed light receiving elements 314 to the left and right sides 320, 316 of the display screen 310 respectively. The display screen 310 further has fixed light emitting elements 326 and fixed light receiving elements 322 to the top and bottom sides 328, 324 of the display screen 310 respectively. Similarly to the first example, the display screen 310 has movable light emitting elements 332 and movable light receiving elements 330 which are arranged vertically across the display screen 310 and which can be moved in a horizontal direction over the display area 312. Moreover, this example display screen 310 also has movable light emitting elements 350 and movable light receiving elements 352 which are arranged horizontally across the display screen 310 and which can be moved in a vertical direction over the display area 312.

In this example, an active area 338 which is a subset of the total available display area 312 can be defined to the left or right sides of the display screen 310 as for the example of Figure 1. This is achieved by moving the vertically movable light emitting elements 350 and movable light receiving elements 352 to the extreme top or bottom of the display screen 10 to be clear of the display area 310, and moving the horizontally movable light emitting elements 332 and movable light receiving elements 330 as required and as described above for the first example.

In addition, in this example, an active area 338 can be defined to the top or bottom parts of the display area 312. This is achieved by moving the horizontally movable light emitting elements 332 and movable light receiving elements 330 to the extreme left or right of the display screen 10 to be clear of the display area 310, and moving the vertically movable light emitting elements 350 and movable light receiving elements 352 as required.

Also, by appropriate movement of both the horizontally movable light emitting elements 332 and movable light receiving elements 330 and the vertically movable light emitting elements 350 and movable light receiving elements 352, an active area 338 can be defined in any of the four corners or quadrants of the display area 312. Also, two or three active areas 338 can be defined at two or three corners or quadrants respectively of the display area 312 if desired.

As in the example of Figure 1, any light emitting elements that are not required to emit light over an active area 338 can be powered down or switched off to save power. In addition, the power output of the light emitting elements that are required to emit light across the selected active area 338 may be reduced when they are closer to the corresponding light receiving elements and/or greater accuracy in detection of a touch in the selected active area 338 may be achieved.

Referring next to Figure 4, this example of a display screen 410 has fixed light emitting elements 426 and fixed light receiving elements 422 to the top and bottom sides 428, 424 of the display screen 410 respectively. This example of a display screen 410 further has fixed light receiving elements 414 to the right side 416 of the display screen 410. This example further has movable light emitting elements 432 which are arranged vertically across the display screen 410 and which can be moved in a horizontal direction over the display area 412. In contrast to the previous examples, there are no fixed light emitting elements to the left side of the display screen 410 and no vertical light receiving elements that are movable horizontally across the display screen 410.

In this example, the movable light emitting elements 432 may be moved (manually and/or by a motor) to define the active area 438 required by the user. If the user wishes to use the maximum possible extent of the display area 412, the movable light emitting elements 432 may be moved to the extreme left. If only a smaller active area 438 is required, the movable light emitting elements 432 may be moved to the right as required. Those fixed light emitting elements 426' that are located over the selected active area 438 may be powered to emit light as usual. Those fixed light emitting elements 426" that are not located over the selected active area 438 may have their power reduced or be switched off altogether. The power of the movable light emitting elements 432 may optionally be reduced as they are moved closer to the fixed light receiving elements 414 to the right side 416 of the display screen 410. But again, as the movable light emitting elements 432 may be moved closer to the fixed light receiving elements 414 to the right side 416 of the display screen 410, the accuracy of detection of a touch in the selected active area 438 may be improved.

It will be understood that the relative locations of fixed and movable light emitting elements and light receiving elements may be reversed and that, furthermore, the vertical fixed elements may be to the left rather than to the right. As another alternative, the movable elements may be arranged horizontally and movable in the vertical direction, and the other fixed elements arranged accordingly.

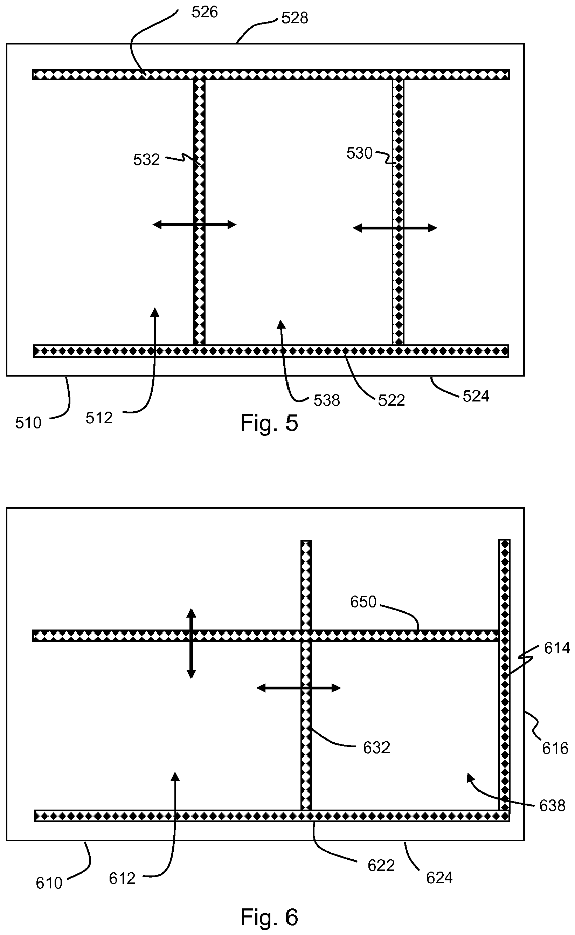

Referring next to Figure 5, this example of a display screen 510 has fixed light emitting elements 526 and fixed light receiving elements 522 to the top and bottom sides 528, 524 of the display screen 510 respectively. This example has movable light emitting elements 532 which are arranged vertically across the display screen 510 and which can be moved in a horizontal direction over the display area 512. In addition, this example has movable light receiving elements 530 which are arranged vertically across the display screen 510 and which can be moved in a horizontal direction over the display area 512. The movable light receiving elements 530 can be moved independently of the movable light emitting elements 532 in this example. In this example, there are no fixed light emitting elements to the left side of the display screen 510 and no fixed light emitting elements to the right side of the display screen 510.

In this example, an active area 538 may be defined between the fixed light emitting elements 526 and fixed light receiving elements 522 to the top and bottom sides 528, 524 of the display screen 510 and between the movable light receiving elements 530 and the movable light emitting elements 532. The movable light receiving elements 530 and the movable light emitting elements 532 may be moved (manually and/or by a motor) to define the lateral extent of the active area 538 required by the user. If the user wishes to use the maximum possible extent of the display area 512, the movable light receiving elements 530 and the movable light emitting elements 532 may be moved to the extreme right and left sides of the display screen 510 respectively. If only a smaller active area 538 is required, the movable light receiving elements 530 and the movable light emitting elements 532 may be moved inwardly of the display screen 510 as required. As with previous examples, those fixed light emitting elements 426 that are not located over the selected active area 538 may have their power reduced or be switched off altogether. The power of the movable light emitting elements 532 may optionally be reduced as they are become closer to the movable light receiving elements 530. But again, as the movable light emitting elements 532 may be moved closer to the movable light receiving elements 530, the accuracy of detection of a touch in the selected active area 538 may be improved.

It will be understood again that the relative locations of fixed and movable light emitting elements and light receiving elements may be reversed such that for example the movable elements may be arranged horizontally and movable in the vertical direction, with the fixed elements being arranged vertically.

Referring next to Figure 6, this example of a display screen 610 has fixed light receiving elements 622 to the bottom side 624 and fixed light receiving elements 614 to the right side 616 of the display screen 510. This example has movable light emitting elements 632 which are arranged vertically across the display screen 610 and which can be moved in a horizontal direction over the display area 612. This example also has movable light emitting elements 650 which are arranged horizontally across the display screen 610 and which can be moved in a vertical direction over the display area 612. In this example, there are not fixed elements at the top or left sides of the display screen 610. (Again, the relative locations of light emitting and light receiving elements may be reversed. Also, the fixed elements may be provided at the top and/or left sides.)

In this example, an active area 638 may be defined by moving the movable light emitting elements 632 and movable light emitting elements 650 as desired. Those light emitting elements that are not required to emit light across the selected active area 638 may have their output power reduced or may be switched off. The power output of the light emitting elements that are required to emit light across the selected active area 638 may be reduced when they are closer to the corresponding light receiving elements and/or greater accuracy in detection of a touch in the selected active area 638 may be achieved.

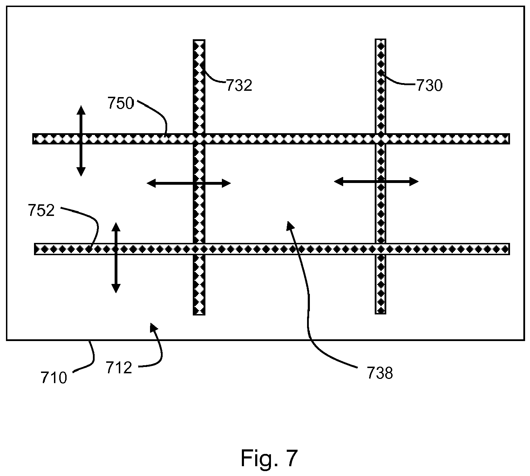

Finally, the example display screen 710 of Figure 7 provides the greatest flexibility in selecting an active area 738. The example display screen 710 of Figure 7 only has movable light emitting elements and movable light receiving elements and has no fixed light emitting elements or fixed light receiving elements. In particular, the display screen 710 has movable light receiving elements 730 and movable light emitting elements 732 which are arranged vertically across the display screen 710 and which can be independently moved in a horizontal direction over the display area 712. The display screen 710 further has movable light emitting elements 750 and movable light receiving elements 752 which are arranged horizontally across the display screen 710 and which can be independently moved in a vertical direction over the display area 712.

In this example, an active area 738 between the various movable elements 730, 732, 750, 752, and which is a subset of the total available display area 712, can be defined freely over the display screen 710 by moving the various movable elements 730, 732, 750, 752 as desired. Again, those light emitting elements that are not required to emit light across the selected active area 738 may have their output power reduced or may be switched off. The power output of the light emitting elements that are required to emit light across the selected active area 738 may be reduced when they are closer to the corresponding light receiving elements and/or greater accuracy in detection of a touch in the selected active area 738 may be achieved.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An interactive display screen, the interactive display screen comprising:
a display area for displaying images;
a first group of light emitting elements for emitting light in a first direction over the display area;
a first group of light receiving elements opposed to the first group of light emitting elements for receiving light emitted in use by the first group of light emitting elements;
a second group of light emitting elements for emitting light in a second direction over the display area; and
a second group of light receiving elements opposed to the second group of light emitting elements for receiving light emitted in use by the second group of light emitting elements;
wherein the display screen is constructed and arranged to detect an interaction with the display screen by detecting an interruption of light emitted in use by at least some of the light emitting elements as detected by at least some of the light receiving elements; and
wherein at least one of the first group of light emitting elements and the first group of light receiving elements is movable in the first direction over the display area to provide an active area of the interactive display screen which is a subset of the display area.

2. An interactive display screen according to claim 1, wherein the display screen is configured to reduce the power of or switch off light emitting elements that do not emit light over the active area.

3. An interactive display screen according to claim 1 or claim 2, configured to receive a command which selects an active area of the interactive display screen.

4. An interactive display screen according to any of claims 1 to 3, wherein the movable first group of light emitting elements or light receiving elements are mounted on a carrier which is movable across the display area in the first direction.

5. An interactive display screen according to claim 4, comprising a motor for driving movement of the carrier across the display area.

6. An interactive display screen according to claim 4 or claim 5, comprising a sensor for monitoring movement of the carrier across the display area.

7. An interactive display screen according to any of claims 1 to 6, wherein both the first group of light emitting elements and the first group of light receiving elements are movable in the first direction over the display area to provide the active area.

8. An interactive display screen according to any of claims 1 to 6, wherein the first group of light emitting elements is movable in the first direction over the display area, the first group of light receiving elements being fixed at a first edge of the display area;
the display screen comprising a further group of light emitting elements, said further group of light emitting elements being fixed at a second edge of the display area which is opposed to the first edge of the display area; and
the display screen comprising a further group of light receiving elements, said further group of light receiving elements being movable with the movable first group of light emitting elements and being arranged to receive light emitted in use by the further group of light emitting elements fixed at the second edge of the display area.

9. An interactive display screen according to any of claims 1 to 8, wherein at least one of the second group of light emitting elements and the second group of light receiving elements is movable in the second direction over the display area to provide the active area of the interactive display screen.

10. An interactive display screen according to claim 9, wherein both the second group of light emitting elements and the second group of light receiving elements are movable in the second direction over the display area to provide the active area.

11. An interactive display screen according to claim 9, wherein the second group of light emitting elements is movable in the second direction over the display area, the second group of light receiving elements being fixed at a third edge of the display area;
the display screen comprising a further group of light emitting elements, said further group of light emitting elements being fixed at a fourth edge of the display area which is opposed to the third edge of the display area; and
the display screen comprising a further group of light receiving elements, said further group of light receiving elements being movable with the movable second group of light emitting elements and being arranged to receive light emitted in use by the further group of light emitting elements fixed at the fourth edge of the display area.

12. An interactive display screen according to any of claims 1 to 11, comprising a processor constructed and arranged to control operation of the light emitting elements in accordance with the active area of the interactive display screen.
